# DEMANDE DE BREVET EUROPEEN

(11) **EP 3 912 533 A1**
(43) Date de publication de la demande: **24.11.2021**
(21) Numéro de dépôt: 21172552.8
(22) Date de dépôt: 06.05.2021
(51) Int. Cl.: A47J 41/00, A47G 19/22

(54) **PROCÉDÉ DE FABRICATION D'UN APPAREIL ÉLECTROMÉNAGER OU USTENSILE CULINAIRE**

(30) Priorité: 19.05.2020 FR 2005025
(71) Demandeur: SEB S.A., 69130 Ecully (FR)
(72) Inventeur: SAUNIER, Christophe, 38270 PRIMARETTE (FR); ARSANE, Sophie, 69100 VILLEURBANNE (FR)
(74) Mandataire: SEB Développement

(57) **Abrégé**

Un procédé de fabrication d'un appareil électroménager ou ustensile culinaire (10) comprenant une étape d'intégration d'un composant électronique ou d'une piste conductrice électrique (20) dans un corps (12) en matériau isolant de l'appareil électroménager ou de l'ustensile culinaire (10), dans lequel l'étape d'intégration est réalisée lors d'une étape de fabrication du corps (12) en matériau isolant ou d'une partie du corps (12) en matériau isolant.

## Description

### Domaine de l'invention

La présente invention se rapporte à un procédé de fabrication d'un appareil électroménager ou ustensile culinaire ainsi qu'à l'appareil électroménager ou ustensile associé.

### Art antérieur

De manière connue, le document EP2907237 décrit un récipient, incluant un conteneur isolant électrique, et destiné à interagir avec un utilisateur. Pour cela, une couche conductrice électriquement est disposée sur une surface du conteneur. On mesure la capacité formée entre la couche conductrice et un objet rapproché et chargé électriquement. Cette mesure est réalisée par l'intermédiaire d'un élément de détection électriquement conducteur et couplé capacitivement à la couche conductrice. Un signal de commande est généré en fonction de la capacité mesurée. Ce signal de commande peut être appliqué sur un transducteur, par exemple un haut-parleur, une source lumineuse ou un actionneur.

Un empilement de couches est disposé sur la face externe du conteneur. Cet empilement de couches délimite une zone de détection d'une surface chargée électriquement, en particulier la main d'un utilisateur. L'empilement de couches comprend d'une part une couche conductrice électriquement et une couche d'isolant électrique. La couche conductrice électriquement est disposée contre la face externe du conteneur. La couche d'isolant électrique recouvre la couche conductrice.

Toutefois, ces solutions ne donnent pas une entière satisfaction.

En effet, l'empilement de couches décrite dans le document EP2907237 implique forcément une augmentation de l'encombrement du récipient ainsi que de son poids.

La présente invention a pour but de résoudre tout ou partie des inconvénients mentionnés ci-dessus.

### Exposé de l'invention

A cet effet, la présente invention concerne un procédé de fabrication d'un appareil électroménager ou ustensile culinaire comprenant une étape d'intégration d'un composant électronique ou d'une piste conductrice électrique dans un corps en matériau isolant de l'appareil électroménager ou de l'ustensile culinaire, dans lequel l'étape d'intégration est réalisée lors d'une étape de fabrication du corps en matériau isolant ou d'une partie du corps en matériau isolant de sorte que le composant électronique ou la piste conductrice électrique comprend au moins une partie du corps en matériaux isolant de l'appareil électroménager.

Une telle disposition permet de réduire l'encombrement et le poids de l'appareil électroménager ou de l'ustensile culinaire. En effet, procédé à une étape d'intégration d'un composant électronique ou d'une piste conductrice électrique lors d'une étape de fabrication permet d'envelopper le composant électronique ou la piste conductrice dans le matériau isolant.

Une telle disposition permet également de s'absoudre des contraintes de forme de l'appareil électroménager ou de l'ustensile puisqu'il n'est pas nécessaire que l'appareil électroménager ou l'ustensile ai des formes droites et plates habituellement nécessaires pour l'intégration d'une piste conductrice électrique ou d'un composant électronique.

Une telle disposition permet d'obtenir un appareil électroménager ou un ustensile culinaire ayant des formes courbes.

Selon un mode de réalisation, le matériau isolant comprend un additif organométallique.

Une telle disposition permet d'activer le composant électronique, ou la piste conductrice électrique après l'étape de fabrication du corps isolant.

Selon un mode de réalisation, l'étape d'intégration d'un composant électronique ou d'une piste conductrice comprend une étape de gravure d'une ligne de gravure dans le corps en matériau isolant.

Une telle disposition permet d'activer le composant électronique ou la piste conductrice.

Selon un mode de réalisation, l'additif organométallique est de l'oxyde de cuivre.

Selon un mode de réalisation, l'étape d'intégration d'un composant électronique ou d'une piste conductrice comprend une étape de catalyse de la ligne de gravure pour que ladite ligne de gravure devienne tout ou partie du composant électronique ou la piste conductrice suite à l'étape de catalyse.

Une telle disposition permet de faire grossir la ligne de gravure afin de former le composant électronique ou la piste conductrice.

L'invention concerne également un appareil électroménager ou ustensile culinaire comprenant un corps en matériau isolant et au moins une piste conductrice d'électricité intégrée au corps en matériau isolant ou un composant électronique intégré au corps en matériau isolant de sorte que le composant électronique ou la piste conductrice électrique comprend au moins une partie du corps en matériaux isolant de l'appareil électroménager.

Une telle disposition permet de réduire l'encombrement et le poids de l'appareil électroménager ou de l'ustensile culinaire.

Une telle disposition permet d'obtenir un appareil électroménager ou un ustensile culinaire ayant des formes courbes.

Selon un mode de réalisation, le corps en matériau isolant forme une surface gauche.

Par courbe ou surface gauche, on entend une courbe ou surface qui n'est pas contenue dans un plan. En d'autres termes, quel que soit le repère de l'espace considéré, la courbe ou surface s'étend selon trois dimensions.

Selon un mode de réalisation, le corps en matériau isolant forme un contenant pour un liquide.

Selon un mode de réalisation, la piste conductrice ou le composant électronique forment tout ou partie d'au moins un capteur.

Selon un mode de réalisation, la piste conductrice ou le composant électronique comprend un ou des capteurs de niveau.

Selon un mode de réalisation, la piste conductrice ou le composant électronique comprend un capteur de température. Le capteur de température pouvant être de toute sorte, telle qu'une thermistance par exemple.

Selon un mode de réalisation, la piste conductrice ou le composant électronique forment tout ou partie d'une unité d'affichage.

Une telle disposition permet d'afficher au moins une information en fonction d'une donnée envoyée par l'au moins un capteur.

Selon un mode de réalisation, l'unité d'affichage est constituée d'au moins une diode électroluminescente.

Selon un mode de réalisation, l'unité d'affichage est constituée d'un écran. L'écran pouvant être de toute sorte tel qu'un écran LCD, OLED par exemple. Selon un mode de réalisation, l'écran est tactile.

Selon un mode de réalisation, la piste conductrice ou le composant électronique forment tout ou partie d'au moins une unité de commande.

Une telle disposition permet de commander l'appareil électroménager ou ustensile culinaire. Par exemple, l'unité de commande permet d'envoyer un ordre de capture à l'au moins un capteur afin que l'unité d'affichage puisse afficher au moins une information en fonction d'une donnée envoyée par l'au moins un capteur.

Selon un mode de réalisation, l'unité de commande est un bouton capacitif.

Selon un mode de réalisation, l'unité de commande est un bouton poussoir.

Selon un mode de réalisation, l'unité de commande est un bouton tactile.

Selon un mode de réalisation, l'appareil électroménager comprend une unité de communication d'appareil, et l'ustensile culinaire comprend une unité de communication d'ustensile et au moins une unité de commande, l'unité de communication d'appareil et l'unité de communication d'ustensile étant agencées pour communiquer l'une avec l'autre de sorte à contrôler une fonction de l'appareil électroménager à l'aide de l'unité de commande de l'ustensile culinaire.

Une telle disposition permet de commander l'appareil électroménager en fonction d'une donnée envoyée par l'au moins un capteur.

Selon un mode de réalisation, l'unité de communication d'appareil et l'unité de communication d'ustensile sont adaptées pour communication selon le protocole Bluetooth®.

Selon un mode de réalisation, le protocole Bluetooth® est Low Energy.

Les différents aspects définis ci-dessus non incompatibles peuvent être combinés.

### Brève description des figures

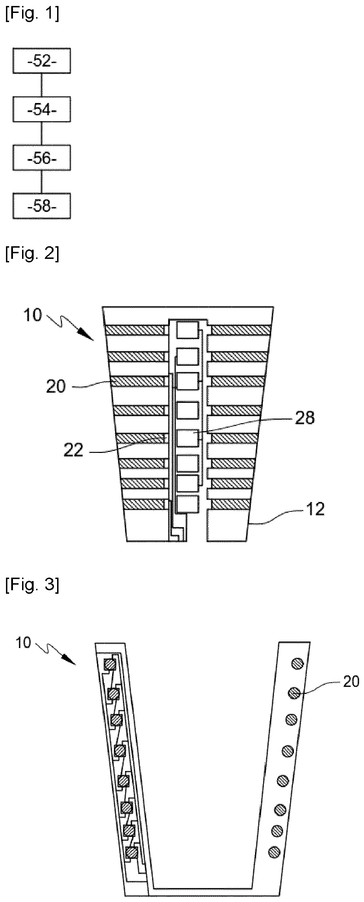

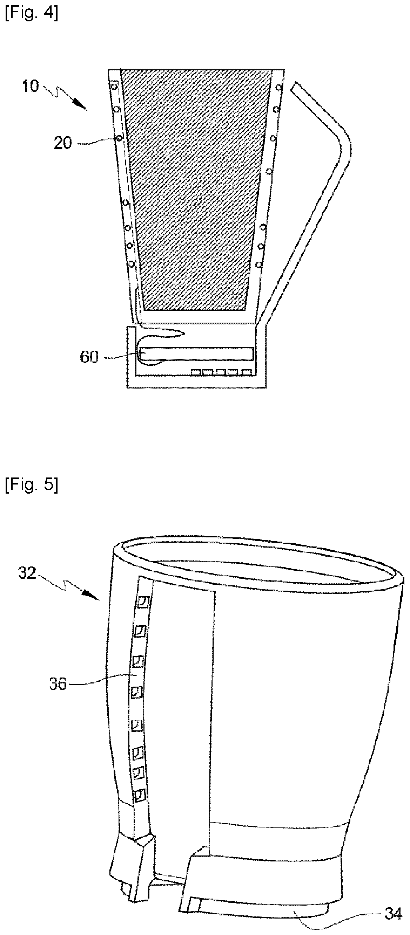

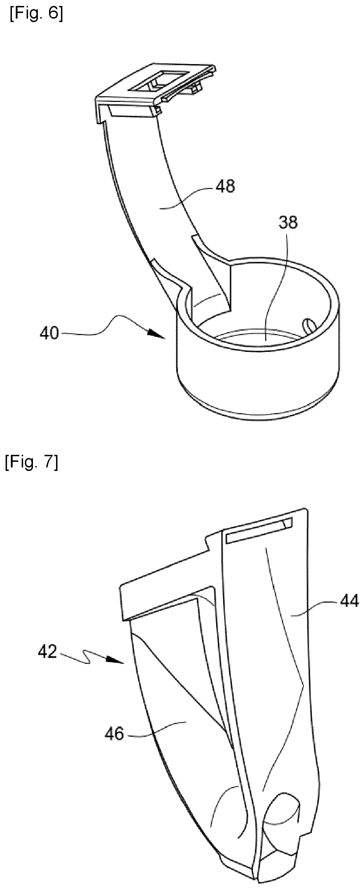

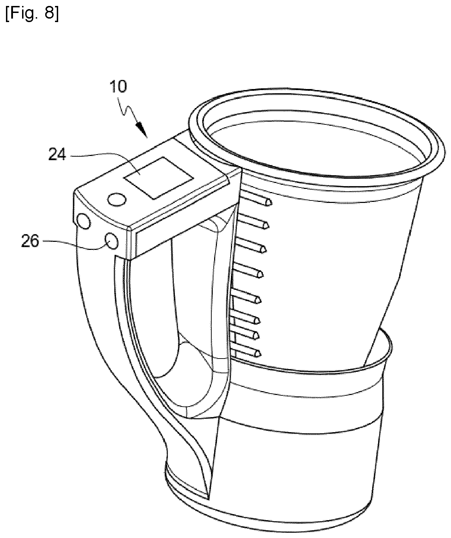

L'invention sera encore mieux comprise à l'aide de la description détaillée qui est exposée ci-dessous en regard des dessins annexés dans lesquels :
Le figure 1 représente les étapes d'un procédé de fabrication d'un appareil électroménager ou ustensile culinaire conformément à la présente invention ;
Le figure 2 représente une vue de face d'un ustensile culinaire conformément à la présente invention ;
Le figure 3 représente une vue schématique en coupe d'un ustensile culinaire conformément à la présente invention ;
Le figure 4 représente une vue schématique de section d'un ustensile culinaire conformément à la présente invention ;
Le figure 5 représente une vue d'une partie récipient d'un ustensile culinaire conformément à la présente invention ;
Le figure 6 représente une vue d'une anse d'un ustensile culinaire conformément à la présente invention ;
Le figure 7 représente une vue d'une unité de liaison d'un ustensile culinaire conformément à la présente invention ; et
Le figure 8 représente une vue d'un ustensile culinaire conformément à la présente invention.

### Description en référence aux figures

Tel que représenté sur la figure 1, le procédé de fabrication d'un appareil électroménager ou ustensile culinaire 10 comprend une étape d'intégration 52 d'un composant électronique ou d'une piste conductrice électrique 20 dans un corps 12 en matériau isolant de l'appareil électroménager ou de l'ustensile culinaire 10. Le matériau isolant comprend un additif organométallique ce qui permet d'activer le composant électronique, ou la piste conductrice électrique après l'étape de fabrication du corps 12 isolant.

Selon un mode de réalisation, l'étape d'intégration 52 est réalisée lors d'une étape de fabrication du corps 12 en matériau isolant ou d'une partie du corps 12 en matériau isolant. Une telle disposition permet de réduire l'encombrement et le poids de l'appareil électroménager ou de l'ustensile culinaire 10. En effet, procédé à une étape d'intégration 52 d'un composant électronique ou d'une piste conductrice 20 électrique lors d'une étape de fabrication permet d'envelopper le composant électronique ou la piste conductrice 20 dans le matériau isolant. Une telle disposition permet également de s'absoudre des contraintes de forme de l'appareil électroménager ou de l'ustensile culinaire puisqu'il n'est pas nécessaire que l'appareil électroménager ou l'ustensile culinaire ait des formes droites et plates habituellement nécessaires pour l'intégration d'une piste conductrice électrique ou d'un composant électronique.

Selon un mode de réalisation, l'étape d'intégration 52 d'un composant électronique ou d'une piste conductrice 20 comprend une étape de gravure 54 laser d'une ligne de gravure dans le corps 12 en matériau isolant. Grâce à une réaction physicochimique entre l'additif organométallique et le laser la gravure est conductrice. Une telle disposition permet d'activer le composant électronique ou la piste conductrice. Selon un mode de réalisation, l'additif organométallique est de l'oxyde de cuivre.

Selon un mode de réalisation, l'étape d'intégration d'un composant électronique ou d'une piste conductrice 20 comprend une étape de catalyse 56 de la ligne de gravure pour que ladite ligne de gravure devienne le composant électronique ou la piste conductrice suite à l'étape de catalyse 56. Une telle disposition permet de faire grossir la ligne de gravure afin de former le composant électronique ou la piste conductrice 20.

Selon un mode de réalisation, le procédé de de fabrication d'un appareil électroménager ou ustensile culinaire 10 comprend une étape de dépose 58. Cette étape consiste à déposer des composants sur le composant électronique ou la piste conductrice 20 afin d'obtenir une connexion électrique.

L'invention concerne également un appareil électroménager ou un ustensile culinaire 10 comprenant un corps 12 en matériau isolant et au moins une piste conductrice 20 d'électricité intégrée au corps 12 en matériau isolant ou un composant électronique intégré au corps 12 en matériau isolant tel que représenté sur les figures 2 à 4. Une telle disposition permet de réduire l'encombrement et le poids de l'appareil électroménager ou de l'ustensile culinaire 10.

Selon un mode de réalisation, le corps 12 en matériau isolant de l'ustensile culinaire 10 forme une courbe gauche et plus particulièrement un récipient.

L'ustensile culinaire, représenté sur les figures 5, 6, 7 et 8, comprend une partie récipient 32 sans fond configurée pour recevoir un élément liquide par exemple. Ladite partie récipient comprend un épaulement circulaire de liaison 34 configuré pour coopérer de manière étanche avec une anse 40, de manière à former un fond 38 à l'ustensile de cuisine 10.

La partie récipient 32 comprend également un orifice d'insertion 36 configuré pour coopérer de manière étanche avec un premier élément de fixation 44 d'une unité de liaison 42.

L'unité de liaison 42 comprend également un deuxième élément de fixation 46 configuré pour coopérer avec une surface de fixation 48 de l'anse 40.

L'ustensile culinaire 10 comprend au moins un capteur 22 tel qu'un capteur de niveau 28 permettant de connaitre le niveau d'un éventuel liquide compris dans la partie récipient du corps 12 en matériau isolant de l'ustensile culinaire 10. Ledit ustensile culinaire 10 comprend également un capteur de température 22 pouvant être de toute sorte, telle qu'une thermistance par exemple. Une telle disposition permet de connaitre la température de l'éventuel liquide compris dans la partie récipient du corps 12 en matériau isolant.

L'ustensile culinaire 10 comprend également une unité d'affichage 24 et plus particulièrement un écran pouvant être de toute sorte tel qu'un écran LCD ou OLED par exemple. Une telle unité d'affichage 24 permet d'afficher au moins une information en fonction d'une donnée envoyée par le capteur de température 22 ou le capteur de niveau 28.

Selon un mode de réalisation, l'ustensile culinaire 10 comprend également des diodes électroluminescentes. Une telle disposition permet par exemple d'allumer les diodes électroluminescentes selon un code couleur prédéfini en fonction de la température de l'éventuel liquide compris dans la partie récipient du corps 12 en matériau isolant.

Tel que représenté à la figure 8, l'ustensile culinaire 10 comprend au moins une unité de commande 26 pouvant être de toute sorte tel qu'un bouton capacitif, un bouton tactile ou un bouton poussoir par exemple. Une telle disposition permet de commander l'appareil électroménager ou ustensile culinaire 10. Par exemple, l'unité de commande permet d'envoyer un ordre de capture à l'au moins un capteur afin que l'unité d'affichage 26 puisse afficher au moins une information en fonction d'une donnée envoyée par l'au moins un capteur.

Tel que représenté à la figure 4, l'ustensile culinaire 10 comprend une unité de gestion 60 telle qu'une carte électronique configurée pour gérer les différents composants électroniques de l'ustensile culinaire 10.

L'invention concerne également un système comprenant un appareil électroménager et un ustensile culinaire 10 tel que l'appareil électroménager comprend une unité de communication d'appareil et l'ustensile comprend une unité de communication d'ustensile et au moins une unité de commande 26 tel que l'unité de communication d'appareil et l'unité de communication d'ustensile sont agencés pour communiquer l'un avec l'autre de sorte à contrôler une fonction de l'appareil électroménager à l'aide de l'unité de commande 26. Une telle disposition permet de commander l'appareil électroménager en fonction d'une donnée envoyée par l'au moins un capteur. Selon un mode de réalisation, l'unité de communication d'appareil et l'unité de communication d'ustensile sont adaptées pour communication selon le protocole Bluetooth Low Energy.

Bien entendu, l'invention n'est pas limitée aux modes de réalisation représentés et décrits ci-avant, mais en couvre au contraire toutes les variantes.

## Revendications

1. Procédé de fabrication d'un appareil électroménager ou ustensile culinaire (10) comprenant une étape d'intégration (52) d'un composant électronique ou d'une piste conductrice électrique (20) dans un corps (12) en matériau isolant de l'appareil électroménager ou de l'ustensile culinaire (10), dans lequel l'étape d'intégration (52) est réalisée lors d'une étape de fabrication du corps (12) en matériau isolant ou d'une partie du corps (12) en matériau isolant de sorte que le composant électronique ou la piste conductrice électrique (20) comprend au moins une partie du corps (12) en matériaux isolant de l'appareil électroménager.

2. Procédé de fabrication selon la revendication 1, dans lequel le matériau isolant comprend un additif organométallique.

3. Procédé de fabrication selon la revendication 2, dans lequel l'étape d'intégration (52) d'un composant électronique ou d'une piste conductrice (20) comprend une étape de gravure d'une ligne de gravure dans le corps (12) en matériau isolant.

4. Procédé de fabrication selon la revendication 3, dans lequel l'étape d'intégration (52) d'un composant électronique ou d'une piste conductrice (20) comprend une étape de catalyse (56) de la ligne de gravure pour que ladite ligne de gravure devienne tout ou partie du composant électronique ou la piste conductrice suite à l'étape de catalyse (56).

5. Appareil électroménager ou ustensile culinaire (10) comprenant un corps (12) en matériau isolant et au moins une piste conductrice (20) d'électricité intégrée au corps (12) en matériau isolant ou un composant électronique intégré au corps (12) en matériau isolant de sorte que le composant électronique ou la piste conductrice électrique (20) comprend au moins une partie du corps (12) en matériaux isolant de l'appareil électroménager.

6. Appareil électroménager ou ustensile culinaire (10) selon la revendication 5, dans lequel le corps (12) en matériau isolant forme une surface gauche.

7. Appareil électroménager ou ustensile culinaire (10) selon l'une quelconque des revendications 5 ou 6, dans lequel le corps (12) en matériau isolant forme un contenant pour un liquide.

8. Appareil électroménager ou ustensile culinaire (10) selon l'une quelconque des revendications 5 à 7, dans lequel la piste conductrice (20) ou le composant électronique forment tout ou partie d'au moins un capteur (22).

9. Appareil électroménager ou ustensile culinaire (10) selon l'une quelconque des revendications 5 à 8, dans lequel la piste conductrice (20) ou le composant électronique forment tout ou partie d'une unité d'affichage (24).

10. Appareil électroménager ou ustensile culinaire (10) selon l'une quelconque des revendications 5 à 9, dans lequel la piste conductrice (20) ou le composant électronique forment tout ou partie d'au moins une unité de commande (26).

11. Système comprenant un appareil électroménager et un ustensile culinaire (10) selon l'une quelconque des revendication 5 à 10, dans lequel l'appareil électroménager comprend une unité de communication d'appareil, et l'ustensile culinaire (10) comprend une unité de communication d'ustensile et au moins une unité de commande (26), l'unité de communication d'appareil et l'unité de communication d'ustensile étant agencées pour communiquer l'une avec l'autre de sorte à contrôler une fonction de l'appareil électroménager à l'aide de l'unité de commande (26) de l'ustensile culinaire (10).
